# DEMANDE DE BREVET EUROPEEN

(11) **EP 1 220 106 A1**
(43) Date de publication de la demande: **03.07.2002**
(21) Numéro de dépôt: 01205011.8
(22) Date de dépôt: 19.12.2001
(51) Int. Cl.: G06F 13/42

(54) **Tranfert d'une série de données**

(30) Priorité: 28.12.2000 FR 0017209
(71) Demandeur: Koninklijke Philips Electronics N.V., 5621 BA Eindhoven (NL)
(72) Inventeur: Penain, Stéphane, 75008 Paris (FR); Seguy, Jean-Christophe, 75008 Paris (FR)
(74) Mandataire: Chaffraix, Jean

(57) **Abrégé**

Un dispositif de traitement de données, par exemple un décodeur MPEG, comprend un système de bus [BUS] à travers lequel un circuit émetteur, par exemple un circuit décodeur à longueur variable [VLD], peut transférer une série d'échantillons vers un circuit récepteur, par exemple un circuit IS. Le circuit émetteur est agencé de transmettre seulement un début de la série d'échantillons qui s'étend jusqu'au point où les échantillons qui restent sont égaux à une valeur de référence et de transmettre une indication "fin de transmission" après le dernier échantillon transmis. Le circuit récepteur est agencé de placer des valeurs de référence après l'échantillon précédant l'indication "fin de transmission" afin de reconstituer la série d'échantillons.

## Description

### DOMAINE TECHNIQUE

L'invention concerne le transfert d'une série de données. L'invention peut-être appliquée dans, par exemple, un encodeur ou un décodeur MPEG (MPEG est l'abréviation de l'expression anglaise Motion Picture Expert Group).

### ETAT DE LA TECHNIQUE ANTERIEURE

Un décodeur MPEG comprend, en autre, les fonctions suivantes: décodage à longueur variable (VLD), balayage inverse (IS), quantification inverse (IQ), transformation cosinus discrète inverse (IDCT) et compensation de mouvement (MC). Ces fonctions traitent typiquement des blocs de 8 fois 8 échantillons. Il est possible de concevoir un décodeur qui comprend un circuit dédié pour chacune de ces fonctions. Ainsi, il existe un circuit VLD, un circuit IS, un circuit IQ, un circuit IDCT et un circuit MC. Un tel décodeur comprend un système de bus qui relie ces circuits. Ainsi, le circuit VLD peut transférer un bloc de 8 fois 8 échantillons vers le circuit IS, ou le circuit IQ, à travers le système de bus. Le transfert d'un bloc peut être sous forme d'une série de 64 échantillons.

### EXPOSE DE L'INVENTION

Un but de l'invention est de permettre des implémentations à relativement faible coût.

Selon l'invention, un dispositif de traitement de données comprenant un système de bus à travers lequel un circuit émetteur, par exemple un circuit VLD, peut transférer une série d'échantillons vers un circuit récepteur, par exemple un circuit IS, comprend les caractéristiques suivantes. Le circuit émetteur est agencé de transmettre seulement un début de la série d'échantillons qui s'étend jusqu'au point où les échantillons qui restent sont égaux à une valeur de référence et de transmettre une indication "fin de transmission" après le dernier échantillon transmis. Le circuit récepteur est agencé de placer des valeurs de référence après l'échantillon précédant l'indication "fin de transmission" afin de reconstituer la série d'échantillons.

Ainsi, le circuit transmetteur transmet seulement une partie d'une série d'échantillons à travers le système de bus quand la série contient des valeurs de référence à la fin. Les valeurs de référence qui constituent la queue de la série ne sont pas transmises. A cet égard il convient de noter qu'une série de 64 échantillons issue d'un circuit VLD et destinée pour un circuit IS, ou un circuit IQ, contient typiquement une queue de valeurs de référence relativement large. Ainsi, l'invention permet de réduire la charge du système de bus en termes de nombre de données à transférer par unité de temps. Par conséquent, l'invention permet l'utilisation d'un système de bus ayant une bande passante moins large. Moins large est la bande passante, moins coûteux est le bus. Par conséquent, l'invention permet des implémentations à relativement faible coût.

Ces aspects de l'invention ainsi que d'autres aspects seront décrits plus en détail en référence aux Figures suivantes.

### BREVE DESCRIPTION DES FIGURES

La Figure 1 est un diagramme de bloc illustrant un décodeur MPEG;
La Figures 2 est un diagramme conceptuel illustrant un transfert d'échantillons dans le décodeur MPEG.

### MODES DE REALISATION DE L'INVENTION

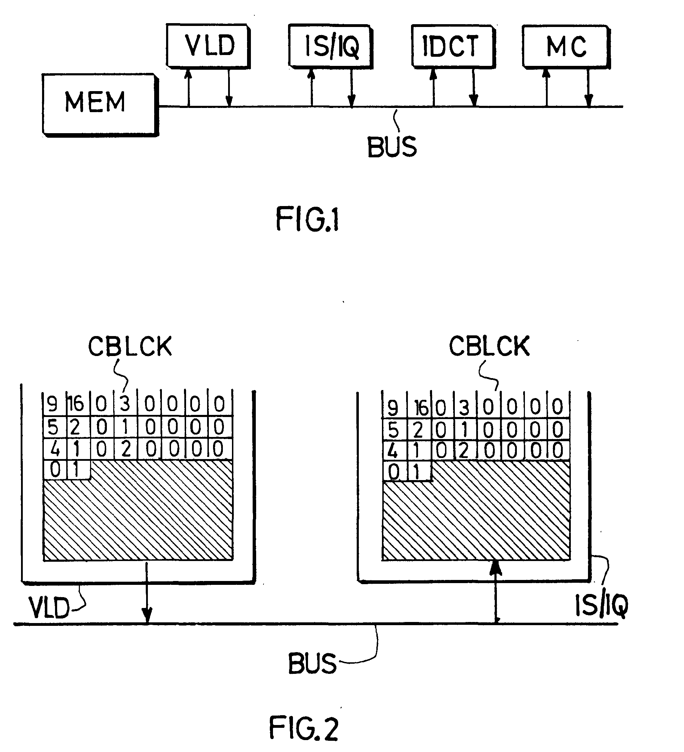

La Figure 1 illustre un décodeur MPEG. Le décodeur MPEG comprend un décodeur à longueur variable [VLD], un circuit de balayage inverse et de quantification inverse [IS/IQ], un circuit de transformation cosinus discrète inverse [IDCT], un circuit de compensation de mouvement [MC], une mémoire [MEM] et un bus [BUS].

Le décodeur MPEG fonctionne globalement comme suit. Le décodeur à longueur variable [VLD] reçoit une série de codes à longueur variable de la mémoire [MEM] et en déduit un bloc de 8 fois 8 coefficients quantifiés. Le décodeur à longueur variable [VLD] transfert le bloc de 8 fois 8 coefficients quantifiés vers le circuit de balayage inverse et de quantification inverse [IS/IQ] à travers le bus [BUS]. Le circuit de balayage inverse et de quantification inverse [IS/IQ] transforme le bloc de 8 fois 8 coefficients quantifiés en bloc de 8 fois 8 coefficients normaux. Le circuit de balayage inverse et de quantification inverse [IS/IQ] transfert le bloc de 8 fois 8 coefficients normaux vers le circuit de transformation cosinus discrète inverse [IDCT] à travers le bus [BUS]. Le circuit de transformation cosinus discrète inverse [IDCT] transforme le bloc de 8 fois 8 coefficients quantifiés en bloc de 8 fois 8 pixels. Le circuit de transformation cosinus discrète inverse [IDCT] transfert le bloc de 8 fois 8 pixels vers le circuit de compensation de mouvement [MC] à travers le bus [BUS]. Le circuit de compensation de mouvement [MC] et autres circuits, non montrés, effectuent des opérations a fin d'obtenir une image décodée.

La Figure 2 illustre le transfert d'un bloc de 8 fois 8 coefficients quantifiés [CBLCK] du décodeur à longueur variable [VLD] vers le circuit de balayage inverse et de quantification inverse [IS/IQ] à travers le bus [BUS]. Les coefficients quantifiés sont représentés par des petits carrés. Un carré noir représente un coefficient quantifié dont la valeur est égale à zéro (0). Un carré blanc représente un coefficient quantifié dont la valeur est spécifiée à l'intérieur du carré.

Le bloc de 8 fois 8 coefficients quantifiés [CBLCK] est transféré via le bus [BUS] sous forme d'une série de valeurs. En effet, le décodeur à longueur variable [VLD] effectue un balayage du bloc de 8 fois 8 coefficients quantifiés [CBLCK] ligne par ligne et de gauche à droite afin de convertir le bloc en une série de valeurs. Le balayage s'arrête au premier carré noir rencontré. Donc, le résultat du balayage est la série de valeurs suivante: 9, 16, 0, 3, 0, 0, 0, 0, 5, 2, 0, 1, 0, 0, 0, 0, 4, 1, 0, 2, 0, 0, 0, 0, 0, 1. Le décodeur à longueur variable [VLD] transmet cette série de valeurs et, à la fin de la série, il transmet une indication "fin de transmission".

Le circuit de balayage inverse et de quantification inverse [IS/IQ] comprend une mémoire d'entrée pour stocker le bloc de 8 fois 8 coefficients quantifiés [CBLCK]. Le circuit de balayage inverse et de quantification inverse [IS/IQ] remplit cette mémoire interne avec des valeurs qui sont égales à zéros (0) avant que la transmission du décodeur à longueur variable [VLD] soit reçue. Lors de la réception de la transmission du décodeur à longueur variable [VLD], le circuit de balayage inverse et de quantification inverse [IS/IQ] effectue un balayage identique au balayage qu'effectue le décodeur à longueur variable [VLD] afin de transmettre le bloc de 8 fois 8 coefficients quantifiés [CBLCK]. Le balayage s'arrête à l'indication "fin de transmission". A cette indication, le balayage est arrivé au premier carré noir. Il s'arrête donc là. Le bloc de 8 fois 8 coefficients quantifiés [CBLCK] est maintenant présent dans la mémoire interne du circuit de balayage inverse et de quantification inverse [IS/IQ].

La description ci-dessus en référence aux différentes Figures illustre l'invention plutôt qu'elle ne la limite. Il est évident qu'il existe de nombreuses alternatives qui rentrent dans la portée des revendications ci-jointes. A cet égard, quelques remarques sont faites en conclusion.

Il existe de nombreuses manières pour implémenter des fonctions au moyen d'articles physiques (en anglais: items of hardware) ou de logiciels (en anglais: software) ou d'une combinaison des deux. A cet égard, les figures sont très schématiques, chaque figure représentant un mode de réalisation seulement. Donc, bien qu'une figure montre différentes fonctions sous forme de blocs séparés, ceci n'exclut pas du tout qu'un seul article physique ou logiciel effectue plusieurs fonctions. Ceci n'exclut nullement qu'une fonction puisse être effectuée par un ensemble d'articles physiques ou de logiciels.

Aucun signe de référence entre parenthèses dans une revendication ne doit être interprété de façon limitative. Le mot "comprenant" n'exclut pas la présence d'autres éléments ou étapes listés dans une revendication. Le mot "un" ou "une" précédant un élément ou une étape n'exclut pas la présence d'une pluralité de ces éléments ou ces étapes.

## Revendications

1. Dispositif de traitement de données comprenant un système de bus à travers lequel un circuit émetteur peut transférer une série d'échantillons vers un circuit récepteur, **caractérisé en ce que**:
- le circuit émetteur est agencé de transmettre seulement un début de la série d'échantillons qui s'étend jusqu'au point où les échantillons qui restent sont égaux à une valeur de référence et de transmettre une indication "fin de transmission" après le dernier échantillon transmis;
- le circuit récepteur est agencé de placer des valeurs de référence après l'échantillon précédant l'indication "fin de transmission" afin de reconstituer la série d'échantillons.

2. Procédé pour transférer une série d'échantillons d'un circuit émetteur vers un circuit récepteur, **caractérisé en ce que** le procédé comprend les étapes suivantes:
- une étape d'émission dans laquelle le circuit émetteur transmet seulement un début de la série d'échantillons qui s'étend jusqu'au point où les échantillons qui restent sont égaux à une valeur de référence et de transmettre une indication "fin de transmission" après le dernier échantillon transmis;
- une étape de réception dans laquelle le circuit récepteur place des valeurs de référence après l'échantillon précédant l'indication "fin de transmission" afin de reconstituer la série d'échantillons.
